# EUROPEAN PATENT APPLICATION

(11) **EP 3 699 849 A1**
(43) Date of publication of application: **26.08.2020**
(21) Application number: 20151724.0
(22) Date of filing: 14.01.2020
(51) Int. Cl.: G06Q 20/02, G06Q 20/20, G06Q 20/38

(54) **A METHOD OF SUPPORTING IDENTIFICATION OF A CUSTOMER USING A PAYMENT CARD OF SAID CUSTOMER AND A SERVER ARRANGED FOR SUPPORTING SAID METHOD**

(30) Priority: 19.02.2019 NL 2022600
(71) Applicant: Monsani B.V., 5801 KJ Venray (NL)
(72) Inventor: POELS, Nick Antonius Martinus Gerardus, 7325 GP APELDOORN (NL)
(74) Representative: Algemeen Octrooi- en Merkenbureau B.V.

(57) **Abstract**

A method of supporting identification of a customer, by an unsafe payment device, using a payment card of said customer, wherein said method comprises the steps of:
- receiving, by a server, from said unsafe payment device, an identification request message comprising bank related customer data that identify said customer;
- creating, by said server, using a one-way hash function, a hash value, by hashing said bank related customer data;
- transmitting, by said server, to said unsafe payment device, said hash value and/or a customer identifier related to said hash value thereby enabling identification of said customer using said hash value and/or said customer identifier. A server arranged for supporting said method.

## Description

The present disclosure according to a first aspect relates to a method of supporting identification of a customer using a payment card of said customer.

According to a second aspect the present disclosure relates to a server arranged for supporting a method of supporting identification of a customer using a payment card of said customer.

The method according to the present disclosure comprises the step of receiving, by a server, from a merchant device, preferably an unsafe payment device, an identification request message comprising bank related customer data that identify said customer. A merchant device, preferably an unsafe payment device such as a payment terminal in an offline store or a website comprising a payment functionality is coupled to the server. To this end the merchant device, preferably the unsafe payment device, may be registered with the server. The server is arranged for receiving an identification request message from the merchant device, preferably the unsafe payment device, for instance after a customer indicated he/she wants to buy something using a payment card, an electronic device emulating a payment card or EMV means. In an offline environment a merchant may indicate on the merchant device, preferably the unsafe payment device, his intention to identify said customer using the payment card of the customer. Alternatively, the identification of said customer using the payment card of the customer may be an integrated routine.

A further step of the method according to the present disclosure is creating, by said server, using a one-way hash function, a hash value, by hashing said bank related customer data. By hashing the bank related customer data a hash value may be created. The hash value may be used for identifying said customer without the need for storing privacy sensitive information such as a bank account number or a credit card number on said server. Moreover, by using the one-way hash function obtaining the bank related customer data from the customer is prevented. As such, the hash value is not considered privacy sensitive information.

In addition, the method according to the present disclosure comprises the step of transmitting, by said server, to said merchant device, preferably said unsafe payment device, said hash value and/or a customer identifier thereby enabling identification of said customer using said hash value and/or said customer identifier. Transmission of said hash value and/or said customer identifier allows the merchant to identify the customer using the customer identifier without the need for storing privacy sensitive information by the merchant device such as the unsafe payment device.

The customer identifier related to said hash value may be created by said server or may be provided to said server. The customer identifier may be used for identifying said customer without the need for storing privacy sensitive information such as a bank account number or a credit card number on said server.

A known method for identifying a customer, by a merchant, is through a loyalty program using a loyalty card such as a customer card. A merchant may want to identify a customer for instance for offering a customer a personalised offer. The personalised offer may be based on previous purchases of said customer registered by the merchant. The customer may participate in the loyalty program after providing information allowing the merchant to identify the customer. To this end, the customer may need to provide privacy sensitive information to the merchant. The method according to the present disclosure relies at least partly on the insight that the merchant may incur relative high costs in securing secrecy of the provided privacy sensitive information. Moreover, the availability of the privacy sensitive information to the merchant may pose a relative large hurdle for the customer for participating in the loyalty program. By creating the hash value, by hashing the bank related customer data, and subsequently using said hash value and/or a customer identifier related to the hash value for identification of the customer, the merchant may avoid cost, or at least greatly reduce any costs, involved in handling customer related data. The merchant no longer has a need for registering privacy sensitive information for allowing a customer to participate in a loyalty program. The customer identifier may comprise a customer identification code such as a customer identification number, a bar code or a QR code.

The method according to the present disclosure further relies at least partly on the insight that registering a customer for a loyalty program and participating in the loyalty program may require a relative large amount of effort from the customer. Known loyalty programs may require a customer participating in the loyalty program to present the loyalty card at each purchase. The applicant has noted that customers relatively often fail to bring along their loyalty card when making a purchase. By using a payment card of said customer, there is no longer a need for the customer to present a loyalty card when making a purchase. Instead, the customer may present the payment card the customer is using for making the purchase.

Moreover, the relative large amount of loyalty programs available to a customer may place a burden on the customer since the customer needs to carry a relative large amount of loyalty cards. It is further noted that a loyalty card may be lost thereby introducing significant cost on behalf of the merchant for maintaining the customer participating in the loyalty program. By using a payment card of said customer, there is no longer a need for the customer to present a relative large amount of loyalty cards. Instead, the customer may present a single payment card for participation in loyalty programs of different merchants.

In addition, the presence of a relative large amount of loyalty cards may pose a burden to the environment. Known loyalty cards may be made of plastic that pose a risk to the environment if lost or disposed of. By using a payment card of said customer, there is no longer a need for production of a relative large amount of plastic loyalty cards that may pose a risk to the environment.

The present method avoids the need for involving the issuer of the payment card for use of the payment card in a loyalty program as a means for identification of the customer. The identification of the customer relies on the data that is stored on the payment card and that may be collected by the payment device. As such no request for identification of the customer involving the issuer of the payment card is needed.

Within the context of the present disclosure an unsafe device is to be understood as a device that requires no certification by designated authorities such as a bank, insurance company or government. An unsafe payment device is a device, such as a payment card reader, that may not be certified as regards compliance with an EMV standard for using EMV cards.

Preferably, said identification request message further comprises a merchant identification for identifying said merchant device, preferably said unsafe payment device, and wherein said step of creating further comprises:
- creating, by said server, using said one-way hash function, said hash value, by hashing said bank related customer data and said merchant identification.

By hashing the bank related customer data and said merchant identification together the risk of identifying the customer by different merchant devices, preferably unsafe payment devices, by the same hash value and/or customer identifier is avoided, or at least significantly reduced. This is beneficial for allowing different merchants to make use of the method according to the first aspect of the present disclosure using a single server according to the second aspect of the present disclosure while avoiding a purchase at a first merchant be recorded under a loyalty program of a second merchant, wherein the second merchant may be unrelated to the first merchant and may be running a different loyalty program independent from the first merchant.

It is advantageous if said bank related customer data comprises at least one of a bank account number and a credit card number. This is beneficial since a bank account number and a credit card number are unique numbers that may be related to a single customer.

In an embodiment of the method according to the first aspect of the present disclosure it is beneficial if said identification request message is encrypted, and wherein said method further comprises the step of:
- decrypting, by said server, said encrypted identification request message. This is beneficial for avoiding the risk, or at least significantly reducing the risk, that privacy sensitive information that may be contained by said identification request message is acquired by an unauthorised third party. Preferably, asymmetric encryption is used for encrypting and decrypting said identification request message.

Preferably, said one-way hash function is a cryptographic hash function, preferably based on SHA-2. A cryptographic hash function is beneficial for avoiding, or at least significantly reducing the risk, that the bank related customer data comprised by said identification request message is recreated from the hash value generated by the hash function. This is beneficial for avoiding the risk, or at least significantly reducing the risk, that privacy sensitive information that may be contained by said identification request message is acquired by an unauthorised third party having access to said hash value.

It is advantageous if said method further comprises the step of:
- establishing between said server and said merchant device, preferably said unsafe payment device, over a public network, a secure connection for carrying traffic; and
   wherein said identification request message is received, by said server, via said secure connection.

Establishing said secure connection between said server and said merchant device, preferably said unsafe payment device, is beneficial for avoiding the risk, or at least significantly reducing the risk, that privacy sensitive information that may be contained by said identification request message is acquired by an unauthorised third party.

In an embodiment of the method according to the first aspect of the present disclosure wherein encryption of the identification request message and a secure connection are combined the security of the transfer is increased while man-in-the-middle attacks are avoided.

Preferably, said merchant device, preferably said unsafe payment device, comprises at least one of a pay desk and a payment card reader, and wherein during said step of transmitting, said hash value and/or said customer identifier is transmitted, by said server, to at least one of said payment desk and said payment card reader.

It is advantageous, if during said step of transmitting, said hash value and/or said customer identifier is transmitted, by said server, to said payment card reader, wherein said method further comprises the step of:
- forwarding, via keyboard emulation, said customer identifier to said payment desk.

It is beneficial if said customer identifier comprises said hash value enabling identification of said customer using said hash value, wherein said hash value is created, by said server, during said step of creating, using said one-way hash function, by hashing said bank related customer data. Using said hash value for identifying said customer is beneficial for avoiding the risk, or at least significantly reducing the risk, that privacy sensitive information is acquired by an unauthorised third party.

Preferably, said customer identifier comprises a customer identification code enabling identification of said customer using said customer identification code.

Preferably, said customer identification code is related to said hash value.

It is beneficial, if said step of transmitting further comprises:
- relating, by said server, said hash value to said customer identification code;
wherein said step of relating further comprises:
- identifying said customer based on said customer identification code.

In this regard, it is beneficial if said step of transmitting further comprises:
- Identifying said customer based on said customer identification code and said merchant identifier.

This is beneficial for allowing different merchants to make use of the method according to the first aspect of the present disclosure using a single server according to the second aspect of the present disclosure while avoiding a purchase at a first merchant be recorded under a loyalty program of a second merchant, wherein the second merchant may be unrelated to the first merchant and may be running a different loyalty program independent from the first merchant.

Preferably, said server comprises a user register comprising said customer identification code and said hash value related to said customer identification code, said method further comprising the step of:
- retrieving, by said server, from said register said customer identification code based on said hash value created, by said server, during said step of creating.

In this regard, it is beneficial if said method further comprising the step of:
- identifying, by said server, said customer based on said customer identification code and said merchant identifier.

This is beneficial for allowing different merchants to make use of the method according to the first aspect of the present disclosure using a single server according to the second aspect of the present disclosure while avoiding a purchase at a first merchant be recorded under a loyalty program of a second merchant, wherein the second merchant may be unrelated to the first merchant and may be running a different loyalty program independent from the first merchant.

In this regard, it is beneficial if said method further comprises the steps of:
- creating, by said server, said customer identification number; and
- coupling, by said server, said customer identification number to said hash value.

Creating and coupling the customer identification code to the hash value is beneficial for providing a customer identifier that may be recognised by at least one of a merchant or the customer. Alternatively, the customer identifier may be provided for instance as a bar code or a QR code that may be identified through scanning by a mobile user device such as a smart phone.

According to a second aspect, the present disclosure relates to a server for supporting a method of supporting identification of a customer using a payment card of said customer.

A server arranged for supporting a method of supporting identification of a customer using a payment card of said customer, said server comprising:
- receive equipment arranged for receiving, from a merchant device, preferably an unsafe payment device, an identification request message comprising bank related customer data that identify said customer;
- process equipment arranged for creating, using a one-way hash function, a hash value, by hashing said bank related customer data;
- transmit equipment arranged for transmitting, to said merchant device, preferably said unsafe payment device,, said hash value and/or a customer identifier related to said hash value thereby enabling identification of said customer using said hash value and/or said customer identifier.

Benefits of the server according to second aspect of the present disclosure are analogue to the benefits of the method according to the first aspect of the present disclosure.

It is advantageous if said identification request message further comprises a merchant identification for identifying said merchant device, preferably said unsafe payment device, and wherein said process equipment is arranged for creating, using said one-way hash function, said hash value, by hashing said bank related customer data and said merchant identification.

By providing process equipment that is arranged for hashing the bank related customer data and said merchant identification together the risk of identifying the customer by different merchant devices, preferably different unsafe payment devices, by the same customer identifier is avoided, or at least significantly reduced. This is beneficial for allowing different merchants to make use of the method according to the first aspect of the present disclosure using a single server according to the second aspect of the present disclosure while avoiding a purchase at a first merchant be recorded under a loyalty program of a second merchant, wherein the second merchant may be unrelated to the first merchant and may be running a different loyalty program independent from the first merchant.

Preferably, said bank related customer data comprises at least one of a bank account number and a credit card number. This is beneficial since a bank account number and a credit card number are unique numbers that may be related to a single customer.

It is advantageous if said identification request message is encrypted, and wherein said server further comprises:
- decrypt equipment arranged for decrypting said encrypted identification request message. This is beneficial for avoiding the risk, or at least significantly reducing the risk, that privacy sensitive information that may be contained by said identification request message is acquired by an unauthorised third party.

Preferably, said one-way hash function is a cryptographic hash function, preferably based on SHA-2. A cryptographic hash function is beneficial for avoiding, or at least significantly reducing the risk, that the bank related customer data comprised by said identification request message is recreated from the hash value generated by the hash function. This is beneficial for avoiding the risk, or at least significantly reducing the risk, that privacy sensitive information that may be contained by said identification request message is acquired by an unauthorised third party having access to said hash value.

It is beneficial if said server further comprises:
- connection equipment arranged for establishing between said server and said merchant device, preferably said unsafe payment device, over a public network, a secure connection for carrying traffic; and
   wherein said receive equipment is arranged for receiving said identification request message via said secure connection.

Establishing said secure connection between said server and said merchant device, preferably said unsafe payment device, is beneficial for avoiding the risk, or at least significantly reducing the risk, that privacy sensitive information that may be contained by said identification request message is acquired by an unauthorised third party.

In a preferred embodiment of the server according to the second aspect of the present disclosure, said merchant device, preferably said unsafe payment device, comprises at least one of a pay desk and a payment card reader, and wherein said transmit equipment is arranged for transmitting said hash value and/or said customer identifier at least to one of said payment desk and said payment card reader.

Preferably, said customer identifier comprises said hash value enabling identification of said customer using said hash value. Using said hash value for identifying said customer is beneficial for avoiding the risk, or at least significantly reducing the risk, that privacy sensitive information is acquired by an unauthorised third party.

Preferably, said server comprises a user register comprising a customer identification code and said hash value related to said customer identification code.

It is advantageous if said customer identifier comprises a customer identification code enabling identification of said customer using said customer identification code, said server further comprising:
- further process equipment arranged for creating said customer identification code; and
- coupling equipment arranged for coupling said customer identification code to said hash value.

Providing further process equipment and coupling equipment for creating and coupling the customer identification code to the hash value is beneficial for providing a customer identifier that may be recognised by at least one of a merchant or the customer. Alternatively, the customer identifier may be provided for instance as a bar code or a QR code that may be identified through scanning by a mobile user device such as a smart phone.

According to a third aspect the present disclosure further relates to a method of supporting identification of a customer using a payment card of said customer, wherein said method comprises the steps of:
- receiving, by a server, from a merchant device, preferably an unsafe payment device, an identification request message comprising bank related customer data that identify said customer;
- creating, by said server, using a one-way hash function, a hash value, by hashing said bank related customer data;
- transmitting, by said server, to said merchant device, preferably said unsafe payment device, said hash value thereby enabling identification of said customer using said customer identifier.

Benefits of the method according to third aspect of the present disclosure are analogue to the benefits of the method according to the first aspect of the present disclosure.

The present disclosure will now be explained by means of a description of a preferred embodiment of a method according to the present disclosure and a server according to the present disclosure, in which reference is made to the following schematic figures, in which:

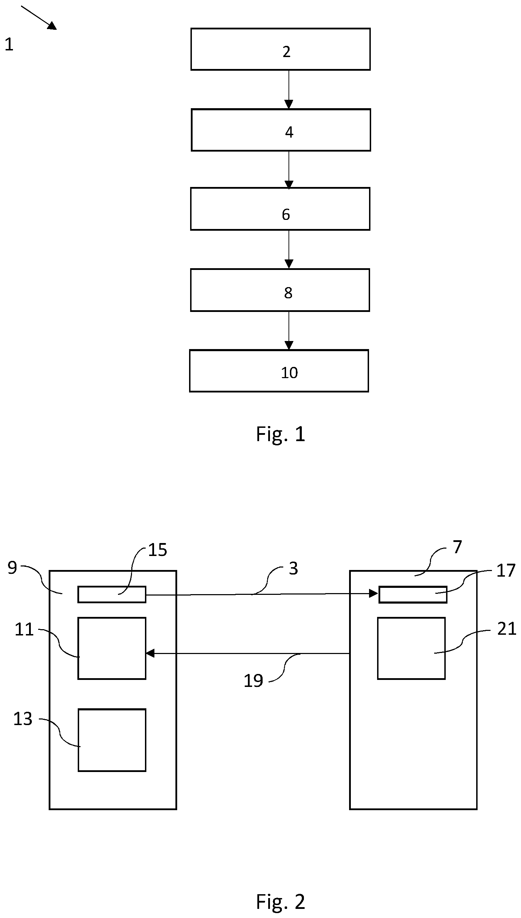

Fig. 1: a method of supporting identification of a customer using a payment card of said customer according to the present disclosure is shown;
Fig. 2: elements of a system arranged for using the method of Fig. 1 is shown;
Fig. 3: a method of supporting identification of a customer using a payment card of said customer according to the present disclosure is shown;
Fig. 4: elements of a system arranged for using the method from Fig. 3 is shown;
Fig. 5: a server arranged for supporting identification of a customer using a payment card of said customer according to the present disclosure is shown;
Fig. 6: a server arranged for supporting identification of a customer using a payment card of said customer according to the present disclosure is shown;

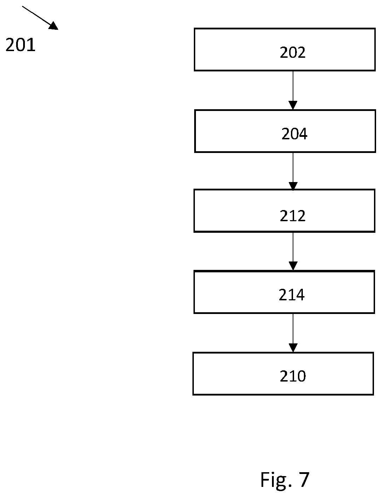

Fig. 7: a method of supporting identification of a customer using a payment card of said customer according to the present disclosure is shown;
Fig. 8: a server arranged for supporting identification of a customer using a payment card of said customer according to the present disclosure is shown.

Method 1 for identification of a customer using a payment card of said customer comprises a step 2 wherein an identification request message 3 is received by a server 7 from a merchant device 9 such as an unsafe payment device. The merchant device comprises a pay desk 11 and a payment card reader 13. The identification request message 3 comprises bank related customer data that identify said customer. The bank related customer data is received by the payment card reader 13 that is used to read a bank account number and/or credit card number of said payment card presented to said payment card reader 13.

The method 1 may comprise a step of encrypting 15 the identification request message 3 by the merchant device 9 and a step of decrypting 17 the identification request message 3 by the server 7. Preferably, the identification request message 3 is asymmetrically encrypted. Moreover, the method 1 may comprise the step of establishing between said server 7 and said merchant device 9, over a public network, a secure connection for carrying traffic. By combining asymmetric encryption of the identification request message 3 and a secure connection the security of the transfer is increased while man-in-the-middle attacks are avoided.

After receiving said identification request message 3, said server 7 creates a customer identifier 19 using a one-way hash function 21 by hashing said bank related customer data during a step 4. Alternatively it is conceivable that the identification request message further comprises a merchant identification for identifying said merchant device, wherein a customer identifier is created by said server, by hashing said bank related customer data and said merchant identification. The one-way hash function 21 is a cryptographic hash function, preferably based on SHA-2 such as SHA-256. The customer identifier 19 may comprise the hash value and/or a customer identification code. The customer identification code may for instance comprise a customer identification number, a bar code or a QR code. The hash value is created by hashing said bank related customer data, such as the bank account number or the credit card number, by said server 7, using the one-way hash function 21. The customer identification code may be created by said server 7 during a creating step 6 and coupled to said hash value during a coupling step 8. The server 7 transmits the customer identifier 19 to the pay desk 11 of the merchant device 9 during a step 10, thereby enabling identification of said customer using said customer identifier 19. A merchant may be informed by displaying a confirmation of a successful identification of the customer on a display provided on the merchant device 9, for instance by displaying the customer identification code.

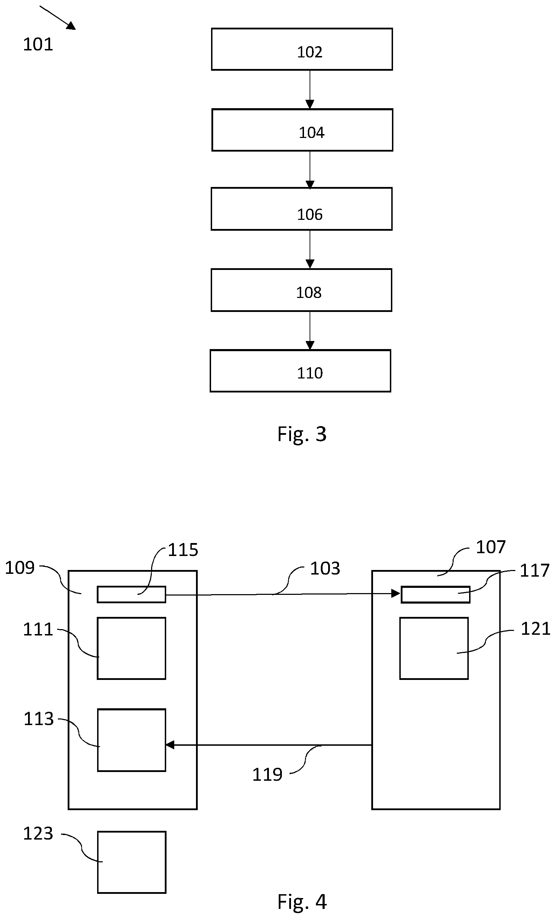

Method 101, shown in Fig. 3, differs from method 1 mainly in that said customer identifier is transmitted, by said server 107, to said payment card reader 113. Elements of method 101 that are similar to elements of method 1 are provided with a reference number equal to the reference number of method 1 raised by 100. The payment card reader 113 may provide on a display thereof an indication, such as a client identification code, to the customer of a successful indication of the customer. The client identification code may for instance be formed by a client identification number, a bar code or a QR code that may be registered by a mobile user device such as a smart phone 123. Alternatively, said display may present said hash value.

It is noted that in an embodiment of the method according to the present disclosure the steps 6, 8, 106 and 108 may be omitted thereby using the hash value for identifying said customer.

Method 201 according to the present disclosure differs mainly from method 1 and 101 in that the steps 6, 8, 106 and 108 are omitted and comprises a step 212 wherein the customer identification code is retrieved, from a user register, based on said hash value created, by a server 207, during said step of creating 204. Elements of method 201 that are similar to elements of method 1 are provided with a reference number equal to the reference number of method 1 raised by 200. The server 207 is provided with a user register comprising a customer identification code and a hash value related to the customer identification code. Method 201 may further comprise a step 214 of identifying, by said server 207, said customer based on said customer identification code and said merchant identifier.

Server 7 for supporting said method 1 comprises receive equipment 25 and process equipment 27. Receive equipment 25 is arranged for receiving said identification request message 3 from said merchant device 9. Process equipment 27 comprises the one-way hashing function 21. The customer identifier 19 may comprise the hash value and/or the customer identification number. Server 7 further comprises transmit equipment 29, decrypt equipment 31 and connection equipment 33. The transmit equipment 29 is arranged for transmitting the customer identifier 19 from the server 7 to the pay desk 11 of the merchant device 9. The decrypt equipment 31 is arranged for decrypting the encrypted identification message 3 before hashing the bank related customer data by said one-way hash function 21. The connection equipment 33 is arranged for establishing between the server 7 and the merchant device 9, over a public network, a secure connection for carrying traffic. Server 7 may further comprise further process equipment 35 and coupling equipment 37. The further process equipment 35 is arranged for creating the customer identification number. The coupling equipment 37 is arranged for coupling said customer identification number to said hash value.

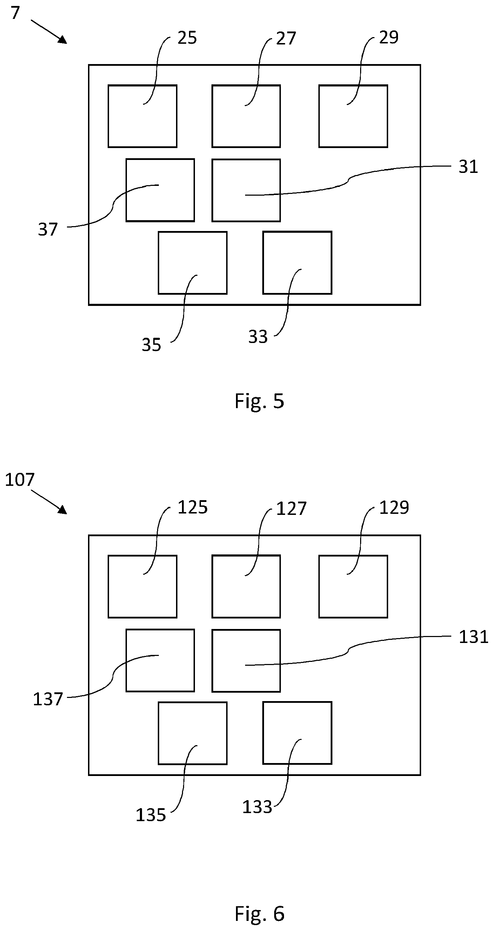

Server 107, shown in Fig. 6, differs mainly from server 7 in that the transmit equipment 129 is arranged for transmitting the customer identifier 119 from the server 107 to the payment card reader 113 of the merchant device 109. Elements of server 107 that are similar to elements of server 7 are provided with a reference number equal to the reference number of server 7 raised by 100.

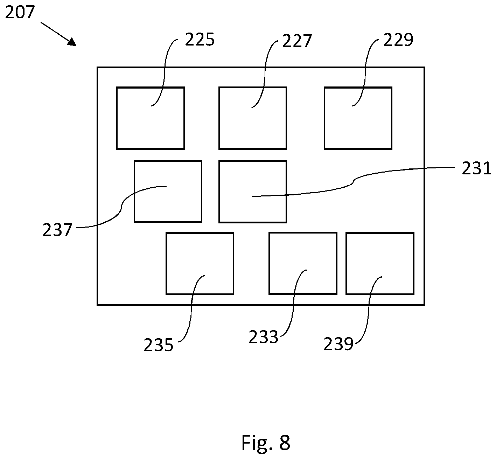

Server 207, shown in Fig. 8, differs mainly from server 7 and server 107 in that the server 207 is provided with a user register 239 comprising a customer identification code and a hash value related to the customer identification code. Elements of server 207 that are similar to elements of server 7 are provided with a reference number equal to the reference number of server 7 raised by 200.

## Claims

1. A method of supporting identification, by an unsafe payment device, of a customer using a payment card of said customer, wherein said method comprises the steps of:
- receiving, by a server, from said unsafe payment device, an identification request message comprising bank related customer data stored onto said payment card that identify said customer and comprising a merchant identification for identifying said unsafe payment device;
- creating, by said server, using a one-way hash function, a hash value, by hashing said bank related customer data;
- transmitting, by said server, to said unsafe payment device, said hash value and/or a customer identifier related to said hash value thereby enabling identification of said customer using said hash value and/or said customer identifier.

2. Method according claim 1, wherein said step of creating further comprises:
- creating, by said server, using said one-way hash function, said hash value, by hashing said bank related customer data and said merchant identification.

3. Method according claim 1 or 2, wherein said bank related customer data comprises at least one of a bank account number and a credit card number.

4. Method according any one of the preceding claims, wherein said identification request message is encrypted, and wherein said method further comprises the step of:
- decrypting, by said server, said encrypted identification request message.

5. Method according to any one of the preceding claims, wherein said method further comprises the step of:
- establishing between said server and said unsafe payment device, over a public network, a secure connection for carrying traffic; and
wherein said identification request message is received, by said server, via said secure connection.

6. Method according to any one of the preceding claims, wherein said unsafe payment device comprises at least one of a pay desk and a payment card reader, and wherein during said step of transmitting, said hash value and/or said customer identifier is transmitted, by said server, to at least one of said payment desk and said payment card reader.

7. Method according to any one of the preceding claims, wherein said customer identifier comprises said hash value.

8. Method according to any one of the claim 1 to 7, wherein said customer identifier comprises a customer identification code enabling identification of said customer using said customer identification code.

9. Method according to claim 8, wherein said server comprises a user register comprising said customer identification code and said hash value related to said customer identification code, said method further comprising the step of:
- retrieving, by said server, from said register said customer identification code based on said hash value created, by said server, during said step of creating.

10. Method according to claim 9, said method further comprising the step of:
- identifying, by said server, said customer based on said customer identification code and said merchant identifier.

11. A server arranged for supporting a method of supporting identification of a customer using a payment card of said customer, said server comprising:
- receive equipment arranged for receiving, from an unsafe payment device, an identification request message comprising bank related customer data that identify said customer and comprising a merchant identification for identifying said unsafe payment device;
- process equipment arranged for creating, using a one-way hash function, a hash value, by hashing said bank related customer data;
- transmit equipment arranged for transmitting, to said unsafe payment device, said hash value and/or a customer identifier related to said hash value thereby enabling identification of said customer using said hash value and/or said customer identifier.

12. Server according to claim 11, wherein said identification request message is encrypted, and wherein said server further comprises:
- decrypt equipment arranged for decrypting said encrypted identification request message.

13. Server according to claim 11 or 12, wherein said server further comprises:
- connection equipment arranged for establishing between said server and said unsafe payment device, over a public network, a secure connection for carrying traffic; and
wherein said receive equipment is arranged for receiving said identification request message via said secure connection.

14. Server according to any one of the claims 11 to 13, wherein said server comprises a user register comprising a customer identification code and said hash value related to said customer identification code.

15. Server according to any one of the claims 11 to 14, wherein said customer identifier comprises a customer identification code enabling identification of said customer using said customer identification code, said server further comprising:
- further process equipment arranged for creating said customer identification code; and
- coupling equipment arranged for coupling said customer identification code to said hash value.
